# EUROPEAN PATENT APPLICATION

(11) **EP 2 302 434 A1**
(43) Date of publication of application: **30.03.2011**
(21) Application number: 09794437.5
(22) Date of filing: 07.07.2009
(51) Int. Cl.: G02B 7/04, G02B 7/02

(54) **DRIVE MODULE, METHOD OF ASSEMBLING THE SAME, AND ELECTRONIC APPARATUS**

(30) Priority: 11.07.2008 JP 2008181368
(71) Applicant: Seiko Instruments Inc., Chiba-shi Chiba 261-8507 (JP)
(72) Inventor: KOTANAGI Susumu, Chiba-shi Chiba 261-8507 (JP); KUME Akira, Chiba-shi Chiba 261-8507 (JP)
(74) Representative: Troesch Scheidegger Werner AG
(86) International application number: PCT/JP2009/062372
(87) International publication number: WO 2010/004993

(57) **Abstract**

A drive module of the invention includes a tubular or columnar body to be driven, a tubular supporting body for receiving therein the body to be driven, a plate spring member for elastically holding the body to be driven so as to be movable in a specific direction with respect to the supporting body, and a driving device for driving the body to be driven in the specific direction against a restoring force of the plate spring member. The driving device includes a shape memory alloy wire engaged with the body to be driven and contracted by heat, which is generated when an electric current is applied thereto, to drive the body to be driven against the restoring force of the plate spring member, and a holding terminal having a wire holding portion for holding an end of the shape memory alloy wire. The holding terminal has a fitting portion positioned by being fitted to the supporting body, and a regulating portion serving as a detent of the supporting body. The holding terminal is supported by and fixed to the supporting body.

## Description

### Technical Field

The present invention relates to a drive module, a method of assembling the same, and an electronic apparatus. The invention relates to a drive module which is suitable for driving, for example, an optical system or a movable member to perform focal position adjustment or for use as an actuator, a method of assembling the same, and an electronic apparatus.
Priority is claimed on Japanese Patent Application No. 2008-181368 filed on July 11, 2008, the contents of which are incorporated herein by reference.

### Background Art

Conventionally, in order to drive bodies to be driven, such as an imaging lens unit, in small electronic apparatuses, such as a cellular phone with a camera function, various drive modules which perform driving using the elasticity of a shape memory alloy wire are proposed (for example, refer to Patent Document 1).
For example, in a drive device of Patent Document 1, the shape memory alloy wire is stretched so that both ends of the shape memory alloy wire are fixed to an upper portion of a columnar portion formed at a base plate and a substantially central portion of the shape memory alloy wire abuts on a lower portion of a lens frame. At this time, both ends of the shape memory alloy wire are pinched and cut by a plate member provided at an upper portion of the columnar portion.

### Related Art Document

### Patent Document

[Patent Document 1] Japanese Unexamined Patent Application, First Publication No. 2007-46561

### Summary of Invention

### Problems to be Solved by the Invention

Meanwhile, in the drive device of Patent Document 1, after the shape memory alloy wire is disposed at the base plate (columnar portion), both ends of the shape memory alloy wire are pinched by the plate material and fixed by caulking, and the surplus portions are cut. Accordingly, since the length, attachment position, attachment angle, and the like of the shape memory alloy wire vary, there is a problem in that the travel distance of a body to be driven varies.

Thus, the present invention has been made in view of the above-described situation, and the object thereof is to provide a drive module, a method of assembling the same, and an electronic apparatus which can suppress the positional deviation of attachment of a shape memory alloy wire and can suppress variations in the travel distance of a body to be driven.

### Solution to Problem

In order to solve the above problems, the present invention provides the following measures.
A drive module related to the present invention includes a tubular or columnar body to be driven, a tubular supporting body for receiving therein the body to be driven, a plate spring member for elastically holding the body to be driven so as to be movable in a specific direction with respect to the supporting body, and a driving device for driving the body to be driven in the specific direction against a restoring force of the plate spring member. The driving device includes a shape memory alloy wire engaged with the body to be driven and contracted by heat, which is generated when an electric current is applied thereto, to drive the body to be driven against the restoring force of the plate spring member, and a holding terminal having a wire holding portion for holding an end of the shape memory alloy wire. The holding terminal has a fitting portion positioned by being fitted to the supporting body, and a regulating portion serving as a detent of the supporting body. The holding terminal is supported by and fixed to the supporting body.

By adopting such a configuration, the driving device in which both ends are fixed by the holding terminal in a state where the length of the shape memory alloy wire is controlled in advance can be used. Additionally, the positional deviation of the holding terminal in the rotational direction can be suppressed by fixing the holding terminal to the supporting body. Accordingly, it is possible to always arrange the holding terminal at a predetermined position. That is, since the distance between the terminals of the shape memory alloy wire after attachment can be kept constant and the holding terminal can be fixed to the supporting body at the same position, variations in the travel distance of the body to be driven of each product can be suppressed, and the yield can be improved.

Additionally, the holding terminal includes a through hole for fitting serving as the fitting portion which is fitted to a pin formed on the supporting body, an abutting portion serving as the regulating portion which abuts on a wall portion formed at the supporting body and prevents rotation when the shape memory alloy wire is contracted, and a through hole for adhesion for allowing an adhesive to flow to between the holding terminal and the supporting body, and the supporting body and the holding terminal are fixed by the adhesive.

By adopting such a configuration, the driving device of which both ends are fixed by the holding terminal in a state where the length of the shape memory alloy wire is controlled in advance can be used. Additionally, the positional deviation of the holding terminal in the horizontal and vertical directions can be suppressed by fitting the through hole for fitting of the holding terminal to the pin of the supporting body. Moreover, by fixing the wall portion of the supporting body and the abutting portion of the holding terminal in an abutting state, the positional deviation of the holding terminal in the rotational direction can be suppressed more reliably. Accordingly, it is possible to always arrange the holding terminal at a predetermined position. That is, since the distance between the terminals of the shape memory alloy wire after attachment can be kept constant and the holding terminal can always be fixed to the supporting body at the same position, variations in the travel distance of the body to be driven of each product can be suppressed, and the yield can be improved.

Additionally, the through hole for adhesion is formed on the side opposite to the wire holding portion with the through hole for fitting therebetween.
By adopting such a configuration, the through hole for fitting can be arranged near the wire holding portion. Accordingly, if the shape memory alloy wire is contracted when the supporting body and the holding terminal are fixed, the holding terminal tends to turn about the pin. However, since the distance between the pin and the wire holding portion can be shortened, the travel distance of the wire holding portion becomes small and the positional deviation of the holding terminal can be suppressed.

Additionally, the holding terminal includes a through hole for fitting serving as the fitting portion which is fitted to a pin formed on the supporting body, and an abutting portion serving as the regulating portion which abuts on a wall portion formed at the supporting body and prevents rotation when the shape memory alloy wire is contracted, and the supporting body and the holding terminal are fixed by welding the head of the pin.
By adopting such a configuration, the driving device of which both ends are fixed by the holding terminal in a state where the length of the shape memory alloy wire is controlled in advance can be used. Additionally, the positional deviation of the holding terminal in the horizontal and vertical directions can be suppressed by fitting the through hole for fitting of the holding terminal to the pin of the supporting body. Moreover, by fixing the wall portion of the supporting body and the abutting portion of the holding terminal in an abutting state, the positional deviation of the holding terminal in the rotational direction can be suppressed more reliably. Accordingly, it is possible to always arrange the holding terminal at a predetermined position. That is, since the distance between the terminals of the shape memory alloy wire after attachment can be kept constant and the holding terminal can always be fixed to the supporting body at the same position, variations in the travel distance of the body to be driven of each product can be suppressed, and the yield can be improved.

Additionally, the holding terminal includes a through hole for fitting serving as the fitting portion which is fitted to a pin formed on the supporting body, and a through hole for detent serving as the regulating portion which is fitted to a detent pin formed on the supporting body. The detent pin and the through hole for detent abut on at least the through hole for detent at two facing points in the detent pin, and the supporting body and the holding terminal are fixed by welding the head of the pin and the head of the detent pin.
By adopting such a configuration, when the holding terminal is supported by and fixed to the supporting body, the positional deviation of the holding terminal in the rotational direction can be suppressed simply by fitting the through hole for fitting of the holding terminal and the through hole for detent to the pin of the supporting body and the detent pin, respectively, and welding the head of the pin and the head of the detent pin. Accordingly, it is possible to always arrange the holding terminal at a predetermined position. That is, since the distance between the terminals of the shape memory alloy wire after attachment can be kept constant and the holding terminal can be fixed to the supporting body at the same position, variations in the travel distance of the body to be driven of each product can be suppressed, and the yield can be improved.

Additionally, the holding terminal includes a through hole for fitting serving as the fitting portion which is fitted to a pin formed on the supporting body, and a through hole for detent serving as the regulating portion which is fitted to a detent pin formed on the supporting body, the detent pin and the through hole for detent abut on at least the through hole for detent at two facing points in the detent pin, and the supporting body and the holding terminal are fixed with an adhesive.
By adopting such a configuration, when the holding terminal is supported by and fixed to the supporting body, the positional deviation of the holding terminal in the rotational direction can be suppressed simply by fitting the through hole for fitting of the holding terminal and the through hole for detent to the pin of the supporting body and the detent pin, respectively, and fixing the holding terminal and the supporting body with an adhesive. Accordingly, it is always possible to arrange the holding terminal at a predetermined position. That is, since the distance between the terminals of the shape memory alloy wire after attachment can be kept constant and the holding terminal can be fixed to the supporting body at the same position, variations in the travel distance of the body to be driven of each product can be suppressed, and the yield can be improved.

Additionally, the through hole for detent is formed on the side opposite to the wire holding portion with the through hole for fitting therebetween.
By adopting such a configuration, the through hole for fitting can be arranged near the wire holding portion. Accordingly, if the shape memory alloy wire is contracted when the supporting body and the holding terminal are fixed, the holding terminal tends to turn about the pin. However, since the distance between the pin and the wire holding portion can be shortened, the travel distance of the wire holding portion becomes small and the positional deviation of the holding terminal can be suppressed.

Further, an electronic apparatus related to the invention includes the above-described drive module. In the electronic apparatus related to the invention, the drive module which can suppress the positional deviation of attachment of the shape memory alloy wire and can suppress variations in the travel distance of the body to be driven is used. Accordingly, a high-precision electronic apparatus can be provided.

Additionally, a method of assembling a drive module related to the present invention is a method of assembling a drive module having: a tubular or columnar body to be driven; a tubular supporting body for receiving therein the body to be driven; a plate spring member for elastically holding the body to be driven so as to be movable in a specific direction with respect to the supporting body; and a driving device including a shape memory alloy wire engaged with the body to be driven and contracted by heat, which is generated when an electric current is applied thereto, to drive the body to be driven against the restoring force of the plate spring member, and a holding terminal having a wire holding portion for holding an end of the shape memory alloy wire. The method comprises: a disposing step of fitting a through hole for fitting formed in the holding terminal to a pin erected from the supporting body, thereby disposing the driving device, in a state where both ends of the shape memory alloy wire are held by the holding terminal; and a fixing step of fixing the supporting body and the holding terminal to each other in a state where the shape memory alloy wire is contracted by heating and a wall portion formed at the supporting body and an abutting portion formed at the holding terminal abut on each other.

By adopting such a configuration, the positional deviation of the holding terminal can be suppressed by fitting the through hole for fitting of the holding terminal to the pin of the supporting body. Moreover, if the drive module is heated, the shape memory alloy wire tends to be contracted, and the holding terminal tends to turn about the pin at that time. However, the position of the holding terminal can be held in a state where the wall portion of the supporting body and the abutting portion of the holding terminal are made to abut on each other, thereby inhibiting the turning. Accordingly, by fixing the supporting body and the holding terminal to each other in a state where the position of the holding terminal is held, the positional deviation of attachment of the shape memory alloy wire can be suppressed, and variations in the travel distance of the body to be driven of each product can be suppressed. Accordingly, the yield can be improved.

Additionally, a through hole for adhesion for allowing a thermosetting adhesive to flow into the holding terminal is formed, and in the fixing step, the thermosetting adhesive is supplied to between the supporting body and the holding terminal through the through hole for adhesion, and heating contracts the shape memory alloy wire and hardens the thermosetting adhesive, thereby fixing the supporting body and the holding terminal to each other.
By adopting such a configuration, in a state where a thermosetting adhesive is made to flow in through the through hole for adhesion and is supplied to between the supporting body and the holding terminal, the drive module is heated in order to harden the adhesive. That is, by heating the drive module at a proper temperature, it is possible to contract the shape memory alloy wire to fix the position of the holding terminal, and it is possible to harden the thermosetting adhesive in that state to fix the supporting body and the holding terminal to each other. Accordingly, the drive module can be produced efficiently.

Additionally, in the fixing step, heating is performed to contract the shape memory alloy wire and to weld the head of the pin, and thereby fixing the supporting body and the holding terminal to each other.
By adopting such a configuration, the shape memory alloy wire is heated by the heat when the pin of the supporting body is welded. That is, it is possible to contract the shape memory alloy wire to fix the position of the holding terminal, and it is possible to weld the pin of the supporting body in that state to fix the supporting body and the holding terminal to each other. Accordingly, the drive module can be produced efficiently.

Additionally, there is provided a method of assembling a drive module having: a tubular or columnar body to be driven; a tubular supporting body for receiving therein the body to be driven; a plate spring member for elastically holding the body to be driven so as to be movable in a specific direction with respect to the supporting body; and a driving device including a shape memory alloy wire engaged with the body to be driven and contracted by heat, which is generated when an electric current is applied thereto, to drive the body to be driven against the restoring force of the plate spring member, and a holding terminal having a wire holding portion for holding an end of the shape memory alloy wire. The method comprises: a disposing step of fitting a through hole for fitting formed in the holding terminal to a pin erected from the supporting body and fitting a through hole for detent formed in the holding terminal to a detent pin erected from the supporting body, thereby disposing the driving device, in a state where both ends of the shape memory alloy wire are held by the holding terminal; and a fixing step of fixing the supporting body and the holding terminal to each other in a state where the shape memory alloy wire is contracted by heating and the detent pin and the through hole for detent abut on at least the through hole for detent at two facing points in the detent pin.

Additionally, in the fixing step, a thermosetting adhesive is supplied to between the supporting body and the holding terminal, heating is performed to contract the shape memory alloy wire and to harden the thermosetting adhesive, and thereby fixing the supporting body and the holding terminal to each other.
By adopting such a configuration, in a state where a thermosetting adhesive is made to flow into and supplied to between the supporting body and the holding terminal, the drive module is heated in order to harden the adhesive. That is, by heating the drive module at a proper temperature, it is possible to contract the shape memory alloy wire to fix the position of the holding terminal, and it is possible to harden the thermosetting adhesive in that state to fix the supporting body and the holding terminal to each other. Accordingly, the drive module can be produced efficiently.

Additionally, in the fixing step, heating is performed to contract the shape memory alloy wire and to weld the head of the pin and the head of the detent pin, and thereby fixing the supporting body and the holding terminal to each other.
By adopting such a configuration, the shape memory alloy wire is heated by the heat when the pin of the supporting body and the detent pin are welded. That is, it is possible to contract the shape memory alloy wire to fix the position of the holding terminal, and it is possible to weld the pin of the supporting body in that state to fix the supporting body and the holding terminal to each other. Accordingly, the drive module can be produced efficiently. Advantageous Effects of Invention

According to the drive module related to the invention, the driving device of which both ends are fixed by the holding terminal in a state where the length of the shape memory alloy wire is controlled in advance can be used. Additionally, the positional deviation of the holding terminal in the rotational direction can be suppressed by fixing the holding terminal to the supporting body. Accordingly, it is possible to always arrange the holding terminal at a predetermined position. That is, since the distance between the terminals of the shape memory alloy wire after attachment can be kept constant and the holding terminal can be fixed to the supporting body at the same position, variations in the travel distance of the body to be driven of each product can be suppressed, and the yield can be improved.

### Brief Description of Drawings

FIG. 1 is a perspective view of a drive module in a first embodiment of the invention.
FIG 2 is an exploded perspective view showing the configuration of the drive module in the first embodiment of the invention.
FIG. 3 is an exploded perspective view showing a drive unit in the first embodiment of the invention.
FIG. 4 is a perspective view showing the drive unit in the first embodiment of the invention.
FIG. 5 is a sectional view taken along a line A-A of FIG. 4.
FIG 6 is a side view of the drive module in the first embodiment of the invention.
FIG 7 is a side view showing a modification of the drive module in the first embodiment of the invention.
FIG 8 is a side view when a wire holding member in a second embodiment of the invention is fixed to a module frame.
FIG 9 is a side view when a wire holding member in a third embodiment of the invention is fixed to a module frame.
FIG. 10 is a side view showing another aspect when the wire holding member in the third embodiment of the invention is fixed to a module frame.
FIG. 11A is a front perspective view of an electronic apparatus in the embodiment of the invention.
FIG 11 B is a rear perspective view of the electronic apparatus.
FIG 11 C is a partial sectional view showing chief parts of the electronic apparatus and taken along a line F-F of FIG. 11B.

### Description of Embodiments

### (First Embodiment)

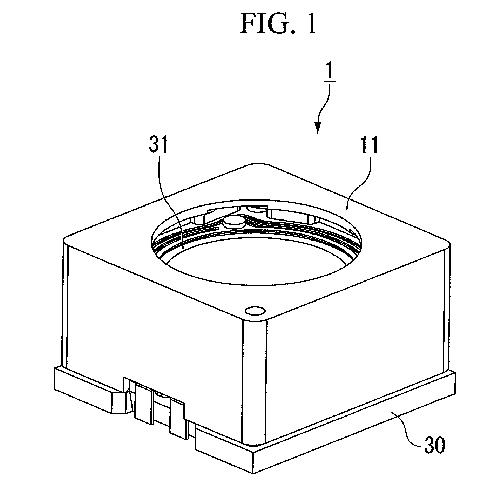

Next, a first embodiment of a drive module related to the invention will be described with reference to FIGS. 1 to 7.

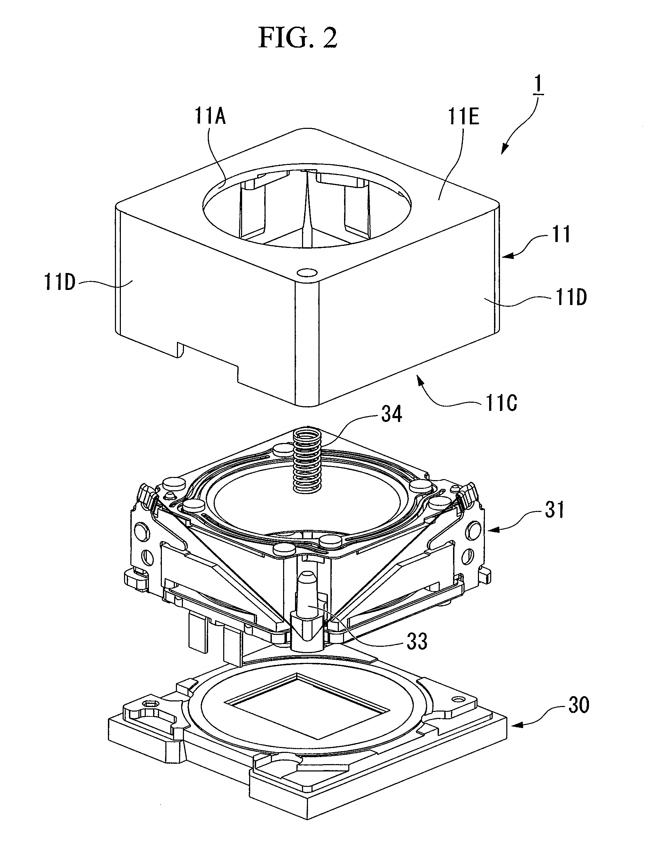

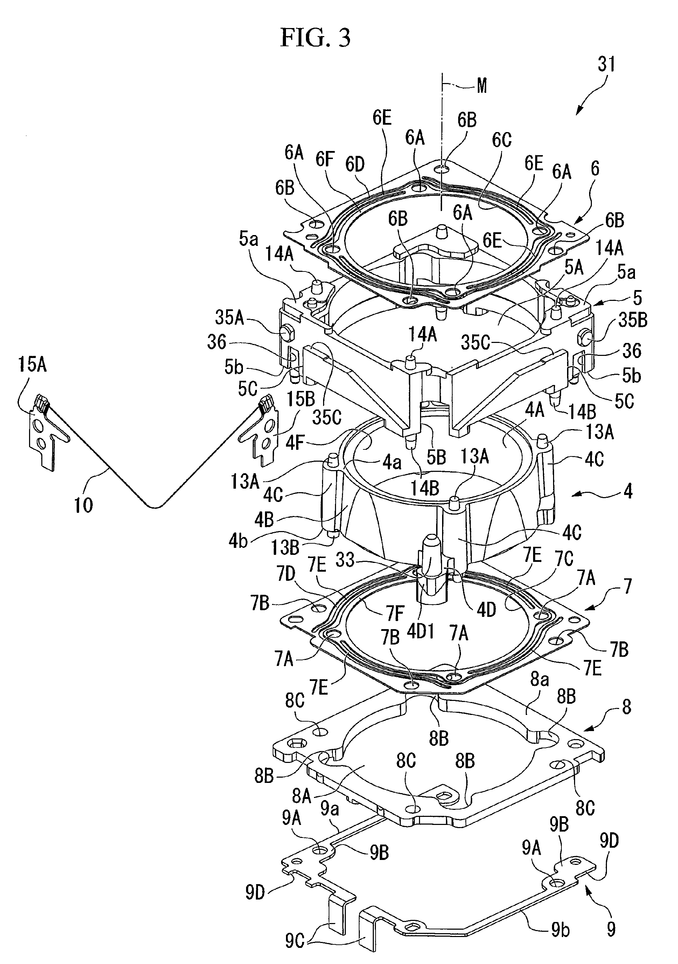

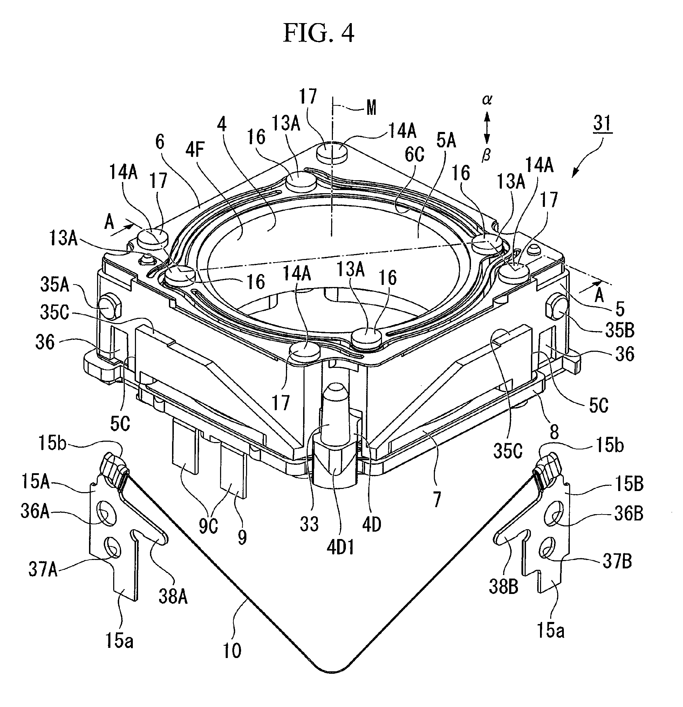

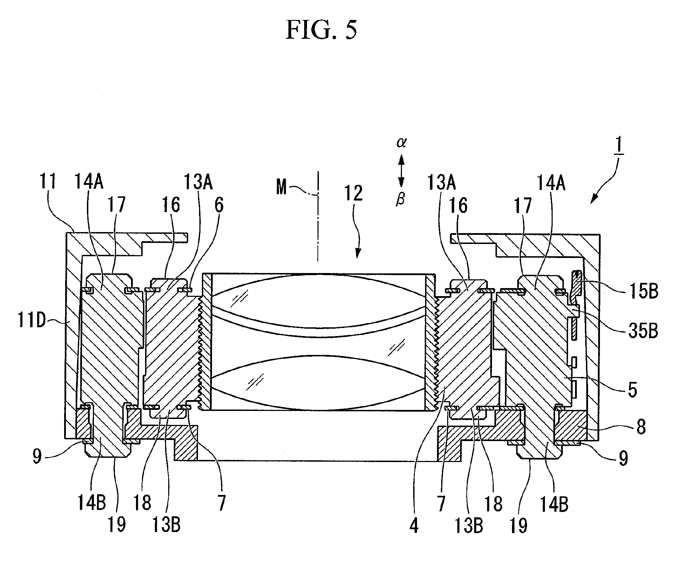

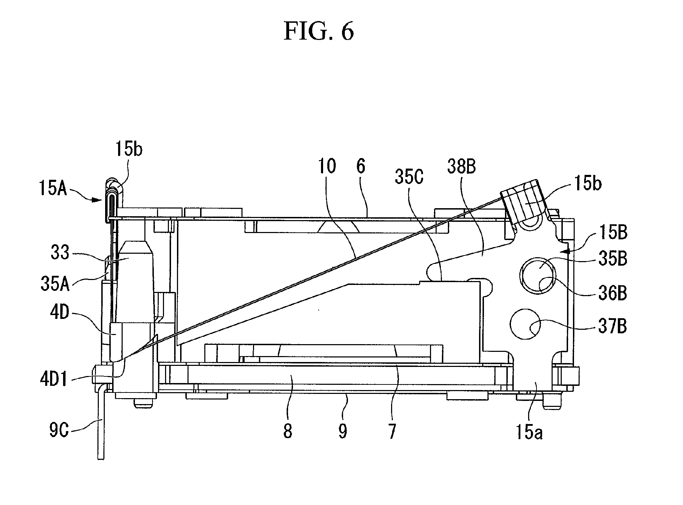

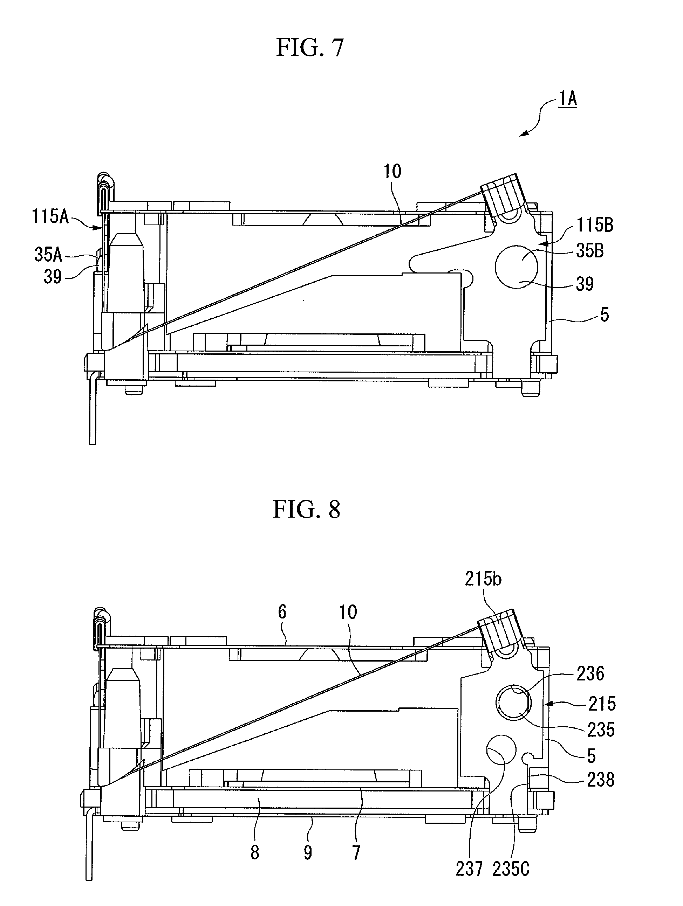

FIG 1 is a perspective view of the drive module related to the first embodiment of the invention. FIG. 2 is an exploded perspective view showing the schematic configuration of the drive module related to the first embodiment of the invention. FIG. 3 is an exploded perspective view showing the schematic configuration of a drive unit related to the first embodiment of the invention. FIG 4 is a perspective view of the drive unit related to the first embodiment of the invention. FIG. 5 is a sectional view taken along a line A-A in FIG. 4. FIG 6 is a side view of the drive module related to the first embodiment of the invention. FIG 7 is a side view showing a modification of the drive module related to the first embodiment of the invention. In addition, illustration of constituent members, such as a lens unit 12, is appropriately omitted in some drawings for the purpose of easy viewing.

As shown in FIG 1 and FIG. 2, a drive module 1 of the present embodiment is formed as a whole in the shape of a box. The drive module 1 is attached to an electronic apparatus or the like in an assembled and completed state, and is fixed by being fitted to or adhered to a substrate (not shown) which supplies a control signal or electric power to the drive module 1. The drive module 1 includes an adapter 30 located on the substrate, a drive unit 31 disposed on the adapter 30, and a cover 11 disposed so as to cover the drive unit 31.

As shown in FIG. 3, the drive unit 31 has as its main constituent members a lens frame 4 serving as a body to be driven, a module frame 5 serving as a supporting body, an upper plate spring 6 and a lower plate spring 7 serving as plate spring members, a module underplate 8, a power feeding member 9, and a shape memory alloy (hereinafter simply referred to as SMA) wire 10, and these constituent members are integrally stacked to constitute one actuator.

As shown in FIGS. 3 to 6, in the assembled state of these members, the lens frame 4 is inserted into the inside of the module frame 5, the upper plate spring 6 and the lower plate spring 7 are fixed together by caulking in a state where the upper and lower plate springs have sandwiched the lens frame 4 and the module frame 5 from an illustrated up-and-down direction, and the module underplate 8 and the power feeding member 9 are stacked in this order from the illustrated lower side and are fixed together by caulking from below the module frame 5. In addition, a cover 11 which covers the stacked body from the upper side is fixed to the module underplate 8.

In addition, symbol M in the drawings is an imaginary axis of the drive module 1 which coincides with the optical axis of the lens unit 12 (refer to FIG. 5), and indicates the driving direction of the lens frame 4. In the following, for the purpose of simplicity of description, even in description of disassembled individual constituent members, positions or directions may be referred to on the basis of the positional relationship with respect to the axis M during assembling. For example, as long as there is no concern regarding misunderstanding even in a case where a distinct circle or cylindrical surface does not exist in a constituent member, a direction along the axis M may be simply referred to as an axial direction, and the radial direction and circumferential direction of a circle having the axis M as its center may be simply referred to as a radial direction and a circumferential direction. Additionally, unless particularly declined, the up-and-down direction shall indicate an up-and-down direction in a case where the axis M is arranged in a vertical direction and the attachment surface of the drive module 1 is turned vertically downward.

Among these constituent members, the lens frame 4 serving as a body to be driven is formed as a whole in a tubular shape as shown in FIG. 3, and an inner peripheral surface 4F of a tubular receiving portion 4A which passes through the center of the lens frame and is formed coaxially with the axis M is formed with a female thread (refer to FIG 5). Also, the lens unit 12, which holds a proper lens or lens group with a lens barrel which has a male thread formed on an outer peripheral portion thereof, is adapted to be capable of being screwed to and fixed to the receiving portion 4A.

Protruding portions 4C (convex portions) which protrude radially outward are provided on an outer wall surface 4B of the lens frame 4 so as to extend in the axial direction at intervals of about 90 degrees in the circumferential direction, and four upper fixing pins 13A and four lower fixing pins 13B which protrude upward and downward, respectively, along the axis M, are respectively provided on end faces 4a and 4b including planes orthogonal to the axis M at upper and lower ends of the protruding portions 4C. The upper fixing pins 13A hold the upper plate spring 6 and the lower fixing pins 13B hold the lower plate spring 7.

Although the positions of the upper fixing pins 13A and the lower fixing pins 13B in plan view may be different, respectively, these pins are arranged at coaxial positions parallel to the axis M in the present embodiment. For this reason, the insertion positions of the upper fixing pins 13A and the lower fixing pins 13B in the upper plate spring 6 and the lower plate spring 7 are made common to each other, respectively.

Additionally, although the individual center positions of the upper fixing pins 13A and the lower fixing pins 13B in the radial direction may be different, these pins are arranged on the same circumference in the present embodiment. For this reason, the individual center positions are arranged in the shape of a tetragonal lattice.

A guide projection 4D (projection portion) is provided radially outside the lens frame 4 so as to protrude radially outward from the lower end side of one protruding portion 4C. As shown in FIG 4, the guide projection 4D engages with the SMA wire 10 at a tip key portion 4D1 thereof and lifts and moves the guide projection 4D upward (in the direction of an arrow α) by the contraction of the SMA wire 10. Additionally, the guide projection 4D is formed with a columnar spring holding portion 33 which is provided so as to extend upward parallel to the axis M. A coil spring 34 (refer to FIG 2) is inserted through the spring holding portion 33, and the lens frame 4 is biased downward by the biasing force of the coil spring 34. This can suppress the movement of the SMA wire 10 which is contracted due to the influence or the like of a surrounding environment to raise the lens frame 4. In addition, the lens frame 4 is integrally molded from thermoplastic resin, for example, polycarbonate (PC), liquid crystal polymer (LCP) resin, or the like, which is capable of being heat-caulked or ultrasonically caulked.

As shown in FIG. 3, the module frame 5 is a tubular member which has an external shape in plan view formed substantially in a rectangular shape as a whole and has a receiving portion 5A including a through hole formed coaxially with the axis M formed at a central portion thereof, and the lens frame 4 is received within the receiving portion 5A.
End faces 5a and 5b including planes orthogonal to the axis M are formed at four corners of upper and lower portions of the module frame 5, four upper fixing pins 14A are provided upward from the end face 5a, and four lower fixing pins 14B are provided downward from the end face 5b.

The upper fixing pins 14A hold the upper plate spring 6, and the lower fixing pins 14B hold the lower plate spring 7, the module underplate 8, and the power feeding member 9. In addition, although the positions of the upper fixing pins 14A in plan view may be different from the arrangement of the lower fixing pins 14B, these pins are arranged at coaxial positions parallel to the axis M, respectively, in the present embodiment. For this reason, the insertion positions of the upper fixing pins 14A and the lower fixing pins 14B in the upper plate spring 6 and the lower plate spring 7 are made common to each other, respectively. Additionally, the distance between the end faces 5a and 5b is set to the same distance as the distance between the end faces 4a and 4b of the lens frame 4.

A lower portion of one corner of the module frame 5 is formed with a cutout 5B of which the groove width in plan view has a size such that the cutout fits to the guide projection 4D of the lens frame 4 so that the guide projection is movable in the axial direction. The cutout 5B allows the guide projection 4D of the lens frame 4 to pass therethrough and allows the tip key portion 4D1 of the guide projection 4D to protrude to the radial outside of the module frame 5 and to position the lens frame 4 in the circumferential direction, in a state where the lens frame 4 is inserted into and received within the module frame 5 from below.

Additionally, a pair of locking grooves 5C for attaching the wire holding members 15A and 15B (refer to FIGS. 3 and 4) holding the SMA wire 10 are formed in side faces on the same side as the corner where the cutout 5B is provided, at two corners adjacent to the cutout 5B of the module frame 5.

Here, pins 35A and 35B are respectively formed at positions where the wire holding members 15A and 15B are disposed, at the side faces of the module frame 5. Moreover, lower portions formed with the pins 35A and 35B are respectively formed with groove portions 36 filled with an adhesive to fix the module frame 5 and the wire holding members 15A and 15B. Also, wall portions 35C, which can suppress turning of the wire holding members 15A and 15B when the wire holding members 15A and 15B are fixed to the module frame 5, are formed. The wall portions 35C extends laterally (directions vertical to the side faces) from the side faces of the module frame 5.

In addition, similarly to the lens frame 4 of the present embodiment, the module frame 5 is integrally molded from thermoplastic resin, for example, polycarbonate (PC), liquid crystal polymer (LCP) resin, or the like, which is capable of being heat-caulked or ultrasonically caulked.

In the present embodiment, the wire holding member 15A is attached to a side face where a pair of terminal portions 9C of the power feeding member 9 protrudes from the drive module 1, and the wire holding member 15B is attached to a side face where the pair of terminal portions 9C of the power feeding member 9 does not protrude from the drive module 1.

As shown in FIG 4, the wire holding members 15A and 15B are conductive members, such as metal plates formed in the shape of a key which is obtained by caulking ends of the SMA wire 10 to wire holding portions 15b. The wire holding members 15A and 15B are respectively formed with through holes 36A and 36B fitted to the pins 35A and 35B of the module frame 5. Additionally, through holes 37A and 37B for allowing an adhesive to flow thereinto are respectively formed axially below the through holes 36A and 36B. Also, the wire holding members are respectively formed with arm portions 38A and 38B which abut on the wall portions 35C of the module frame 5 to inhibit turning of the wire holding members 15A and 15B when the module frame 5 and the wire holding members 15A and 15B are fixed. The wire holding members fit to the locking grooves 5C and the pins 35A and 35B from the side and allow the wall portions 35C and the arm portions 38A and 38B to abut on each other, thereby positioning and holding the end of the SMA wire 10.

The wire holding members 15A and 15B include the piece-shaped terminal portions 15a on the sides opposite to the wire holding portions 15b (caulking positions) of the SMA wire 10, and are adapted such that the terminal portions 15a protrude slightly downward from the module underplate 8 stacked below the module frame 5, in the state of being attached to the module frame 5.

Additionally, the SMA wire 10 of which both ends are held by the pair of wire holding members 15A and 15B is locked to the tip key portion 4D1 of the guide projection 4D of the lens frame 4 protruding from the cutout 5B of the module frame from below, and the lens frame 4 is biased upward via the tip key portion 4D1 by the tension of the SMA wire.

As shown in FIGS. 3 and 4, the upper plate spring 6 and the lower plate spring 7 are respectively stacked above the module frame 5 and below the lens frame 4 inserted into the module frame 5. The upper plate spring 6 and the lower plate spring 7 are flat-plate-shaped plate spring members punched substantially in the same shape, and for example, include metal plates, such as stainless (SUS) steel sheets.

The upper plate spring 6 (lower plate spring 7) has an external shape in plan view formed substantially in a rectangular shape similar to the upper (lower) end of the module frame 5, has a circular opening 6C (7C) slightly larger than the inner peripheral surface 4F of the lens frame 4 formed coaxially with the axis M at a central portion thereof, and is formed as a whole in the shape of a ring.

Four through holes 6B (7B) which can be respectively inserted through the individual upper fixing pins 14A (lower fixing pins 14B) are formed corresponding to the arrangement positions of the upper fixing pins 14A (lower fixing pins 14B) formed near the corners of the module frame 5, near the corners of the upper plate spring 6 (lower plate spring 7). This allows the module frame 5 to be positioned within a plane orthogonal to the axis M.

Four through holes 6A (7A) which can be respectively inserted through the individual upper fixing pins 13A (lower fixing pins 13B) are formed corresponding to the arrangement positions of the upper fixing pins 13A (lower fixing pins 13B) formed in the module frame 4, in the upper plate spring 6 (lower plate spring 7).

Additionally, ring portions 6F (7F) are formed radially outside the opening 6C (7C), and four slits 6D (7D), which extends substantially in the shape of a semi-circular arc in the circumferential direction from positions near the through holes 6A (7A) which face each other in diagonal directions with the axis M therebetween, are formed in the state of overlapping each other in the radial direction by a substantially quadrant circular arc.

This forms a plate spring member in which four spring portions 6E (7E), which extend substantially in the shape of a quadrant circular arc from a rectangular frame body on the outside of the upper plate spring 6 (lower plate spring 7), extend to near the through holes 6A (7A), respectively.

In this way, the upper plate spring 6 (lower plate spring 7) is provided in a rectangular shape such that the external shape thereof is substantially made to conform to the external shape of the module frame 5, and is formed in a ring-like area where the spring portions 6E (7E) and the ring portions 6F (7F) run along the opening 6C (7C). Also, since the through holes 6B (7B) which are fixed portions are provided at the corners which have a spare space depending on the arrangement of the upper fixing pins 14A (lower fixing pins 14B) which fix the upper plate spring 6 (lower plate spring 7) to the module frame 5, the shape of the through holes 6B (7B) can be separated from the spring portions 6E (7E). Thus, manufacture by precise punching or manufacture by etching becomes easy.

The module underplate 8 is obtained by sandwiching and stacking the lower plate spring 7 between the module underplate and the module frame 5 from below in a state where the individual lower fixing pins 14B of the module frame 5 are passed through the through holes 7B of the lower plate spring 7 and the individual lower fixing pins 13B of the lens frame 4 received within the module frame 5 are passed through the through holes 7A of the lower plate spring 7, and fixing a rectangular external shape frame of the lower plate spring 7 to the end face 5b of the module frame 5 in a pressed state.

The shape of the module underplate 8 is a plate-like member which has almost the same rectangular external shape as the external shape of the module frame 5, and a substantially circular opening 8A having the axis M as its center is formed at a central portion of the module underplate so as to penetrate in the thickness direction. Also, four U-shaped recesses 8B for avoiding the interference with a caulking portion which will be described later are formed at positions corresponding to the arrangement positions of the individual lower fixing pins 13B of the lens frame 4 on the side of an upper surface 8a stacked on the lower plate spring 7 during assembling. Additionally, the through holes 8C for allowing the lower fixing pins 14B to be inserted therethrough, respectively, are formed corresponding to the arrangement positions of the individual lower fixing pins 14B of the module frame 5, at the individual corners located at the peripheral edge of the module underplate 8. For example, synthetic resin which has an electric insulation property and a light blocking property is adopted as the material of the module underplate 8. Additionally, since the module underplate 8 has an electric insulation property, the module underplate serves as an insulating member which fixes the power feeding member 9 in the state of being electrically insulated from the lower plate spring 7.

The power feeding member 9 includes a pair of electrodes 9a and 9b which are plate-shaped metal plates, respectively. Both the electrodes 9a and 9b include polygonal metal plates provided with a substantially L-shaped wiring portion 9B running along the external shape of the module underplate 8, and a terminal portion 9C which protrudes toward the outside of the external shape of the module underplate 8 from an end of the wiring portion. Also, the respective wiring portions 9B are provided with two through holes 9A for allowing two lower fixing pins 14B adjacent to each other along the external shape of the module underplate 8 among the lower fixing pins 14B of the module frame 5 protruding downward from the lower surface of the module underplate 8 to be inserted therethrough, thereby positioning the electrodes 9a and 9b with respect to the module frame 5.

In the present embodiment, as shown in FIG. 4, the terminal portions 9C of the electrodes 9a and 9b are provided in the module frame 5 so as to protrude in parallel axially downward from a side face where the wire holding member 15A is attached.

For this reason, a conductive connecting portion 9D which is cut out in the shape of a recess in order to electrically connect the terminal portion 15a of the wire holding member 15A is provided at a side face on the wiring portion 9B between the through hole 9A and the terminal portion 9C in the electrode 9a.

Additionally, a cutout conductive connecting portion 9D is formed at a place where the connecting portion is connected to the terminal portion 15a of the wire holding member 15B at a side face of the wiring portion 9B in the electrode 9b. In the conductive connecting portion 9D, the electrode 9b and the wire holding member 15B are electrically connected together.

As means which electrically connects the individual conductive connecting portions 9D to the terminal portions 15a, for example, soldering or adhesion by a conductive adhesive can be adopted.

As shown in FIG 2, the cover 11 is a member in which side wall portions 11D extend downward from an outer edge portion of the upper surface 11E so as to cover the module frame 5 in an externally fittable manner and a rectangular opening 11 C is formed on the lower side, and a circular opening 11A having the axis M at its center provided at a central portion of the upper surface 11E. The size of the opening 11A is set to a size such that the lens unit 12 can enter and leave the opening.

A method of assembling the drive module 1 of such a configuration will be described in turn.
In a first step, first, the lens frame 4 is inserted into the receiving portion 5A of the module frame 5 from below, and each end face 5a of the module frame 5 and the end face 4a of the lens frame 4 are aligned with each other at the same height. Also, the individual through holes 6B and 6A of the upper plate spring 6 are respectively inserted through the individual upper fixing pins 14A of the module frame 5 and the individual upper fixing pins 13A of the lens frame 4.

Thereafter, the tip portions of the individual upper fixing pins 13A and 14A which have protruded upward through the individual through holes 6A and 6B of the upper plate spring 6 are heat-caulked by heater tips which are not shown, thereby forming a caulking portion 16 which is a first fixing portion and a caulking portion 17 which is a second fixing portion, respectively (refer to FIGS. 4 and 5).

At this time, the end face 4a of the lens frame 4 and the end face 5a of the module frame 5 are aligned with each other on the same plane and are arranged without deforming the flat-plate-shaped upper plate spring 6, so that heat caulking can be performed. Therefore, since it is not necessary to press down the upper plate spring 6 to deform, caulking can be performed easily. Additionally, the occurrence of floating caused by the deformation of the upper plate spring 6 or the like can be prevented.
Additionally, since the height of each heater tip can be made common, even if the caulking portions 16 and 17 are formed simultaneously, variations in caulking accuracy can be reduced.

Next, in a second step, the individual through holes 7A of the lower plate spring 7 are respectively inserted through the individual lower fixing pins 13B of the lens frame 4. In that case, the individual through holes 7B of the lower plate spring 7, the individual through holes 8C of the module underplate 8, and the individual through holes 9A of the power feeding member 9 are simultaneously inserted through the individual lower fixing pins 14B of the module frame 5. Thereafter, the tip portions of the individual lower fixing pins 13B which have protruded downward through the individual through holes 7A of the lower plate spring 7 are heat-caulked by heater tips, thereby forming a caulking portion 18 which is a first fixing portion (refer to FIG 5).

At this time, since the axial distance between the end faces 4a and 4b of the lens frame 4 and the axial distance between the end faces 5a and 5b of the module frame 5 are equal to each other, the end faces 4b and 5b are aligned with each other at the same plane, and the module underplate 8 is stacked and arranged without deforming the flat-plate-shaped lower plate spring 7, so that heat caulking can be performed. Thus, the occurrence of floating or the like caused by the deformation of the lower plate spring 7 can be prevented.
Additionally, since the height of each heater tip can be made common, even if the caulking portion 18 is formed simultaneously, variations in caulking accuracy can be reduced.

Next, in a third step, the lower ends of the individual lower fixing pins 14B which have protruded downward through the through holes 7B, 8C, and 9A, are heat-caulked by heater tips, thereby forming a caulking portion 19 (refer to FIG. 5) which is a second fixing portion.

At this time, since the height of each heater tip can be made common, even if the caulking portion 19 is formed simultaneously, variations in caulking accuracy can be reduced.
Additionally, since the recesses 8B are formed in the module underplate 8, the caulking portion 18 formed in the second step does not come into contact with the module underplate 8.

By performing the operations of these first to third steps, the upper plate spring 6, the lower plate spring 7, the module underplate 8, and the power feeding member 9 are stacked on and fixed to both ends of the lens frame 4 and the module frame 5.

In addition, since the upper fixing pins 13A and the lower fixing pins 13B; and the upper fixing pins 14A and the lower fixing pins 14B are coaxially provided, respectively, the positions on a plane of the heater tips for forming the caulking portions 16 and 18 and the caulking portions 17 and 19, respectively, are made common to each other in the caulking of the first to third steps. Therefore, since it is not necessary to change the position of the heater tips in each caulking, the caulking operation can be performed efficiently.

Thus, since sandwiching and fixing can be carried out between the supporting body and the body to be driven by the caulking portions by heat-caulking the plate spring members, the time required for solidification is short compared to a case where fixing is made by adhesion or the like, assembling time can be reduced. Additionally, there is no possibility that parts may be contaminated due to generation or the like of gas when an adhesive is hardened. Additionally, fixing which is stabilized with time can be performed. As a result, the reliability of the fixing portions can be improved.

Additionally, since fixing parts, such as screws, are not used, a simple configuration in which the number of parts is reduced is obtained, and further reduction in weight and size becomes possible. Particularly, since the weight of the lens frame 4 which is a body to be driven is reduced, high-speed and low-power-consumption driving becomes possible.

Next, in a fourth step (disposing step), the pair of wire holding members 15A and 15B to which the SMA wire 10 is attached are fixed to the module frame 5. Specifically, the through holes 36A and 36B of the wire holding members 15A and 15B are fitted to two pins 35A and 35B formed in the module frame 5, and the wire holding members 15A and 15B are locked to the locking grooves 5C, respectively. In that case, the central portion of the SMA wire 10 is locked to the tip key portion 4D1 of the guide projection 4D, and the tip key portion 4D1 is hung so as to be supported from below. Additionally, the individual terminal portions 15a of the wire holding members 15A and 15B protruding downward from the module underplate 8, are respectively locked or arranged close to the conductive connecting portions 9D of the electrodes 9a and 9b which are the power feeding member 9 fixed to the module underplate 8.

Next, in a fifth step (fixing step), a thermosetting adhesive is made to flow into the through holes 37A and 37B, and is filled into the groove portions 36 of the module frame 5. If the groove portions 36 have been filled up with the thermosetting adhesive, the adhesive is put into a heating furnace in order to harden the adhesive. By performing, for example, heating for about 20 to 30 minutes at about 100°C within the heating furnace, the adhesive is hardened and the module frame 5 and the wire holding members 15A and 15B are adhered and fixed together.

Here, since the SMA wire 10 is also heated when the adhesive is heated for fixing, the SMA wire 10 is contracted. Accordingly, the wire holding members 15A and 15B tend to turn about the pins 35A and 35B in the direction of the guide projection 4D (a direction in which the SMA wire 10 is contracted). In the present embodiment, as the wall portions 35C are formed in the module frame 5, the arm portions 38A and 38B are formed in the wire holding members 15A and 15B, and the wall portions 35C and the arm portions 3 8A and 38B abut on each other, turning of the wire holding members 15A and 15B can be inhibited as described above. That is, in a state where the turning of the wire holding members 15A and 15B is inhibited (a state where the positions of the wire holding members 15A and 15B are fixed), the adhesive can be hardened and the wire holding members 15A and 15B can be positioned with high accuracy.

After the module frame 5 and the wire holding members 15A and 15B are adhered and fixed together, the individual terminal portions 15a are electrically connected to the conductive connecting portions 9D, respectively, using soldering, a conductive adhesive, or the like, for example.

Next, in a sixth step, the cover 11 is covered above the module frame 5, and the side wall portions 11D and the module underplate 8 are joined together. For example, joining is made by fitting after engaging claws or the like are provided in the side wall portions 11D, or the module underplate 8 and the side wall portions 11D are joined together by adhesion or welding. In addition, the coil spring 34 is inserted into the spring holding portion 33 of the guide projection 4D before the cover 11 is covered. By arranging the coil spring 34 in this way, one end of the coil spring 34 abuts on the back of the upper surface 11E of the cover 11 and the other end of the coil spring abuts on the guide projection 4D so as to bias the lens frame 4 axially downward. In addition, in the present embodiment, the coil spring 34 has a biasing force which resists the force by which the SMA wire 10 tends to be contracted when the ambient temperature is 70°C. Additionally, the caulking portions 16 and 17 are in the state of being separated from the back of the upper surface 11E of the cover 11, respectively. From the above, the assembling of the drive module 1 main body is completed.

Thereafter, the adapter 30 is attached to the lower side of the drive unit 31, and is then attached to a substrate. Fixing means, such as adhesion or fitting can be adopted for the attachment of the drive module 1 to the substrate.

In addition, the substrate may be an independent member attached to the drive module 1 or may be a member arranged so as to be connected to an electronic apparatus or the like.

Moreover, the lens unit 12 is screwed into and attached to the lens frame 4 through the opening 11A of the cover 11.

The reason why the lens unit 12 is attached last in this way is because contamination of lenses of the lens unit 12 or adhesion of dust or the like caused by the assembling operation is prevented. However, for example, in a case where the drive module 1 is delivered in a state of a product to which the lens unit 12 is attached or in a case where the opening 11A of the cover 11 is intended to be smaller than the external shape of the lens unit 12, for example, in a case where the lens unit serves also as an opening diaphragm, this step may be carried out at an earlier stage (before the sixth step).

Next, the operation of the drive module 1 will be described. In a state where electric power is not supplied to the terminal portions 9C, in the drive module 1, the forces which act on the lens frame 4, such as the tension from the SMA wire 10 and the biasing force of the coil spring 34 and the restoring forces from the upper plate spring 6 and the lower plate spring 7 in the caulking portions 16 and 18 are balanced, and the lens frame 4 to which the lens unit 12 is attached is held at a specific position in the axial direction.

If electric power is supplied to the power feeding member 9 from the terminal portions 9C, for example, the electrode 9a, the wire holding member 15A, the SMA wire 10, the wire holding portions 15b, and the electrode 9b are conducted, respectively. Therefore, an electric current flows into the SMA wire 10. Thereby, if Joule heat is generated in the SMA wire 10, the temperature of the SMA wire 10 rises, and the transformation start temperature of the SMA wire 10 is exceeded, the SMA wire 10 is contracted to a length according to the temperature.

As a result, the guide projection 4D of the lens frame 4 moves upward (in the direction of α in the drawings). This deforms the coil spring 34, the upper plate spring 6, and the lower plate spring 7, respectively, and an elastic restoring force according to the deformation is biased to the lens frame 4. Also, the lens frame 4 stops at a position where this elastic restoring force balances with the tension of the SMA wire 10.

At this time, since the upper plate spring 6 and the lower plate spring 7 constitute a parallel spring, the lens frame 4 is accurately moved along the axis M even if the lens frame is not made to run along an axial guide member or the like. For this reason, it is possible to reduce the number of parts and realize miniaturization. Additionally, since the sliding load to the guide member is also not generated, it is possible to realize low power consumption.

Additionally, if the supply of electric power is stopped, the SMA wire 10 becomes extensible, and the lens frame 4 moves to a downward (the direction of β in the drawings) balanced position. By controlling the amount of power supply in this way, the lens frame 4 can be driven in the direction of the axis M.

According to the present embodiment, both ends of the SMA wire 10 can be fixed by the wire holding members 15A and 15B in a state where the length of the SMA wire 10 is controlled in advance, variations in the length of the SMA wire 10 can be suppressed. Additionally, by fitting the through holes 36A and 36B of the wire holding members 15A and 15B to the pins 35A and 35B of the module frame 5, the positional deviation of the wire holding members 15A and 15B can be suppressed. Moreover, by fixing the wall portions 35C of the module frame 5 and the arm portions 38A and 38B of the wire holding members 15A and 15B in an abutting state, the positional deviation of the wire holding members 15A and 15B can be suppressed more reliably. Accordingly, variations in the travel distance of the lens frame 4 of each product can be suppressed, and the yield can be improved.

Additionally, since the through holes 37A and 37B are formed on the sides opposite to the wire holding portions 15b with the through holes 36A and 36B therebetween, the through holes 36A and 36B can be arranged near the wire holding portions 15b. Accordingly, if the SMA wire 10 is contracted when the module frame 5 and the wire holding members 15A and 15B are fixed together, the wire holding members 15A and 15B tend to turn about the pins 35A and 35B. However, since the distance between the pins 35A and 35B and the wire holding portions 15b can be shortened, the positional deviation of the wire holding members 15A and 15B can be suppressed.

Moreover, if the drive module 1 is heated, the SMA wire 10 tends to be contracted, and the wire holding members 15A and 15B tend to turn about the pins 35A and 35B at that time. However, the positions of the wire holding members 15A and 15B can be held in a state where the wall portions 35C of the module frame 5, and the arm portions 38A and 38B of the wire holding members 15A and 15B are made to abut on each other, thereby inhibiting the turning. Accordingly, by fixing the module frame 5 and the wire holding members 15A and 15B in a state where the positions of the wire holding members 15A and 15B are held, the positional deviation of attachment of the SMA wire 10 can be suppressed, and variations in the travel distance of the lens frame 4 of each product can be suppressed.

Also, in a state where a thermosetting adhesive is made to flow in through the through holes 37A and 37B and the adhesive is supplied to between the module frame 5 and the wire holding members 15A and 15B, the drive module 1 is heated in order to harden the adhesive. Accordingly, by heating the drive module at a proper temperature, it is possible to contract the SMA wire 10 to fix the positions of the wire holding members 15A and 15B, and it is possible to harden the thermosetting adhesive in that state to fix the module frame 5 and the wire holding members 15A and 15B. As a result, the drive module 1 can be produced efficiently.

Next, a modification of the present embodiment will be described.
FIG 7 is a side view showing the configuration of a drive module related to a modification of the first embodiment. In addition, illustration of the cover is omitted in FIG 7. As shown in FIG 7, a drive module 1A of the present modification is provided by being replaced with a drive module in which the wire holding members 15A and 15B of the first embodiment are not formed with the through holes 37A and 37B, and the module frame 5 and the wire holding members 115A and 115B are fixed by welding heads 39 of the pins 35A and 35B. Heat welding is adopted as a method of welding the heads 39 of the pins 35A and 35B.

By adopting such a configuration, substantially the same working effects as those of the first embodiment described above can be obtained, and the SMA wire 10 can be contracted by the heat generated when the heads 39 of the pins 35A and 35B are welded. Accordingly, it is possible to fix the positions of the wire holding members 115A and 115B, and it is possible to weld the heads 39 of the pins 35A and 35B to fix the module frame 5 and the wire holding members 115A and 115B. As a result, the drive module 1 A can be produced efficiently.

### (Second Embodiment)

Next, a second embodiment of the invention will be described with reference to FIG 8. In addition, since the present embodiment is partially different from the first embodiment only in the configuration of the wire holding member and the module frame and is substantially the same as the first embodiment in other configurations, the same parts are designated by the same reference numerals and the detailed description thereof is omitted.
FIG 8 is a side view showing the fixed state between the module frame and the wire holding member in the present embodiment. In addition, in the present embodiment, only one wire holding member will be described (the other wire holding member also has the same configuration).

As shown in FIG. 8, a wire holding member 215 is a conductive member, such as a metal plate formed in the shape of a key which is obtained by caulking an end of the SMA wire 10 to a wire holding portion 215b. The wire holding member 215 is formed with a through hole 236 fitted to a pin 235 of the module frame 5. Additionally, a through hole 237 for allowing an adhesive to flow thereinto is formed below the through hole 236. Also, an abutting portion 238 is formed which abuts on a wall portion 235C of the module frame 5 so as to inhibit turning of the wire holding member 215 when the module frame 5 and the wire holding member 215 are fixed. By fitting the wire holding member 215 so that the through hole 236 is inserted through the pin 235 from a side of the module frame 5, and making the wall portion 235C and the abutting portion 238 abut on each other, the ends of the SMA wire 10 can be positioned and held.

The assembling method and operation of the drive module are the same as those of the first embodiment. Additionally, the working effects in the present embodiment are also the same as those of the first embodiment. That is, since both ends of the SMA wire 10 can be fixed by the wire holding member 215 in a state where the length of the SMA wire 10 is controlled in advance, variations in the length of the SMA wire 10 can be suppressed. Additionally, by fitting the through hole 236 of the wire holding member 215 to the pin 235 of the module frame 5, the positional deviation of the wire holding member 215 can be suppressed. Moreover, by fixing the wall portion 235C of the module frame 5 and the abutting portion 238 of the wire holding member 215 in an abutting state, the positional deviation of the wire holding member 215 can be suppressed more reliably. Accordingly, variations in the travel distance of the lens frame 4 of each product can be suppressed, and the yield can be improved.

Moreover, if the drive module is heated, the SMA wire 10 tends to be contracted, and the wire holding member 215 tends to turn about the pin 235 at that time. However, the position of the wire holding member 215 can be held in a state where the wall portion 235C of the module frame 5 and the abutting portion 238 of the wire holding member 215 are made to abut on each other, thereby inhibiting the turning. Accordingly, by fixing the module frame 5 and the wire holding member 215 in a state where the position of the wire holding member 215 is held, the positional deviation of attachment of the SMA wire 10 can be suppressed, and variations in the travel distance of the lens frame 4 of each product can be suppressed.

### (Third Embodiment)

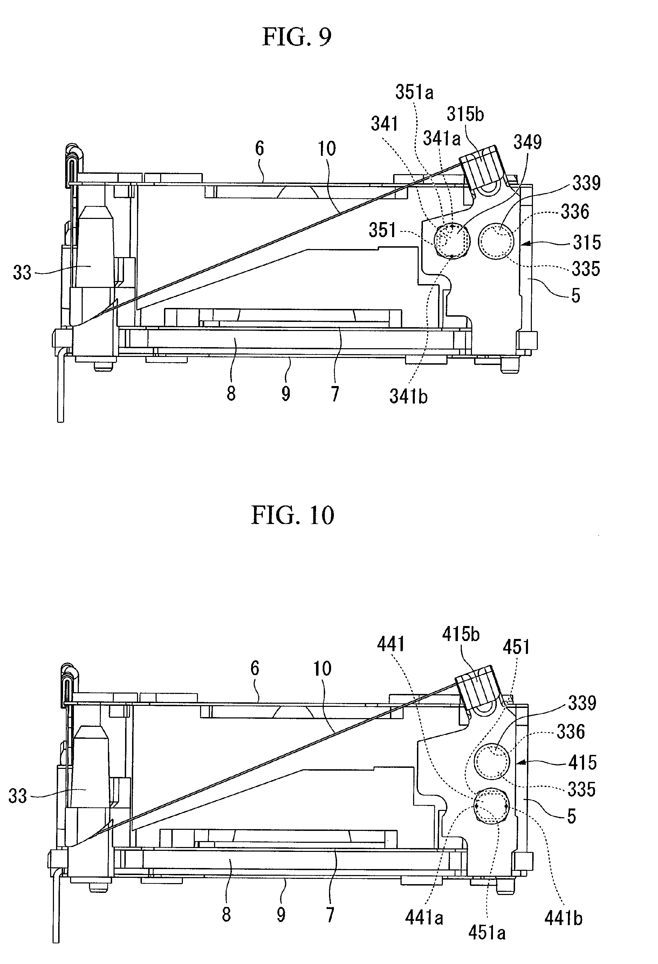

Next, a third embodiment of the invention will be described with reference to FIGS. 9 and 10. In addition, since the present embodiment is partially different from the first embodiment only in the configuration of the wire holding member and the module frame and is substantially the same as the first embodiment in other configurations, the same parts are designated by the same reference numerals and the detailed description thereof is omitted.

FIG. 9 is a side view showing the fixed state between the module frame and the wire holding member in the present embodiment. In addition, in the present embodiment, only one wire holding member will be described (the other wire holding member also has the same configuration).

As shown in FIG 9, a wire holding member 315 is a conductive member, such as a metal plate formed in the shape of a key which is obtained by caulking an end of the SMA wire 10 to a wire holding portion 315b. The wire holding member 315 is formed with a through hole 336 fitted to a pin 335 of the module frame 5. Additionally, a detent pin 341 is formed at a side (the side where the spring holding portion 33 is formed) of the pin 335 in the module frame 5. As for the detent pin 341, in plan view, the upper and lower sides are formed substantially in the shape of a circular arc, and the left and right sides are formed substantially in the shape of a straight pin, respectively.

Additionally, a through hole 351 for detent is formed at the position of the wire holding member 315 corresponding to the detent pin 341. The through hole 351 for detent is formed substantially in the shape of a square whose angles are chamfered in plan view. Additionally, the detent pin 341 and the through hole 351 for detent are formed such that the heights thereof in the up-and-down direction are approximately equal to each other. That is, if the detent pin 341 is fitted to the through hole 351 for detent, both facing ends 341a and 341b of the detent pin 341 in the up-and-down direction abut on an inner peripheral surface 351a of the through hole 351 for detent.

By adopting such a configuration, turning of the wire holding member 315 can be inhibited when the module frame 5 and the wire holding member 315 are fixed. Accordingly, by fitting the wire holding member 315 so that the through hole 336 is inserted through a pin 335 from a side of the module frame 5 and fitting the wire holding member so that the through hole 351 for detent is inserted through the detent pin 341, and thereby making both the ends 341a and 341b of the detent pin 341 abut on the inner peripheral surface 351a of the through hole 351 for detent, the ends of the SMA wire 10 can be positioned and held.

Additionally, as a method of fixing the wire holding member 315 and the module frame 5, after the wire holding member 315 is attached to the module frame 5, the head 339 of the pin 335 and the head 349 of the detent pin 341 are welded, respectively, and the individual heads 339 and 349 are machined and fixed so as to become larger than the through hole 336 and the through hole 351 for detent in plan view. In addition, an adhesive may be made to flow into a gap between the pin 335 and the through hole 336 or a gap between the detent pin 341 and the through hole 351 for detent so as to fix the wire holding member 315 and the module frame 5. Otherwise, a through hole for allowing a thermosetting adhesive to flow thereinto may be formed below the through hole 336, and the adhesive may be made to flow into the through hole so as to fix the wire holding member 315 and the module frame 5.

The assembling method and operation of the drive module are the same as those of the first embodiment. Additionally, the working effects in the present embodiment are also the same as those of the first embodiment. That is, since both ends of the SMA wire 10 can be fixed by the wire holding member 315 in a state where the length of the SMA wire 10 is controlled in advance, variations in the length of the SMA wire 10 can be suppressed. Additionally, by fitting the through hole 336 of the wire holding member 315 to the pin 335 of the module frame 5, the positional deviation of the wire holding member 315 can be suppressed. Moreover, by fixing both the ends 341a and 341b of the detent pin 341 of the module frame 5 and the inner peripheral surface 351a of the through hole 351 for detent in an abutting state, the positional deviation of the wire holding member 315 can be suppressed more reliably. Accordingly, variations in the travel distance of the lens frame 4 of each product can be suppressed, and the yield can be improved.

Moreover, if the drive module is heated, the SMA wire 10 tends to be contracted, and the wire holding member 315 tends to turn about the pin 335 at that time. However, the position of the wire holding member 315 can be held in a state where both the ends 341a and 341b of the detent pin 341 of the module frame 5 and the inner peripheral surface 351a of the through hole 351 for detent are made to abut on each other, thereby inhibiting the turning. Accordingly, by fixing the module frame 5 and the wire holding member 315 in a state where the position of the wire holding member 315 is held, the positional deviation of attachment of the SMA wire 10 can be suppressed, and variations in the travel distance of the lens frame 4 of each product can be suppressed.

In addition, as shown in FIG 10, a detent pin 441 may be formed below the pin 335 in the module frame 5. At this time, a wire holding member 415 is a conductive member, such as a metal plate formed in the shape of a key which is obtained by caulking an end of the SMA wire 10 to a wire holding portion 415b. As for the detent pin 441, in plan view, the left and right sides are formed substantially in the shape of a circular arc, and the upper and lower sides are formed substantially in the shape of a straight pin, respectively. Additionally, a through hole 451 for detent which is formed substantially in the shape of a square whose angles are chamfered in plan view is formed at the position of the wire holding member 415 corresponding to the detent pin 441. Also, if the detent pin 441 is fitted to the through hole 451 for detent, both facing ends 441a and 441b of the detent pin 441 in the horizontal direction abut on an inner peripheral surface 451a of the through hole 451 for detent, so that turning of the wire holding member 415 can be prevented.

Next, an electronic apparatus related to the embodiment of the invention will be described.

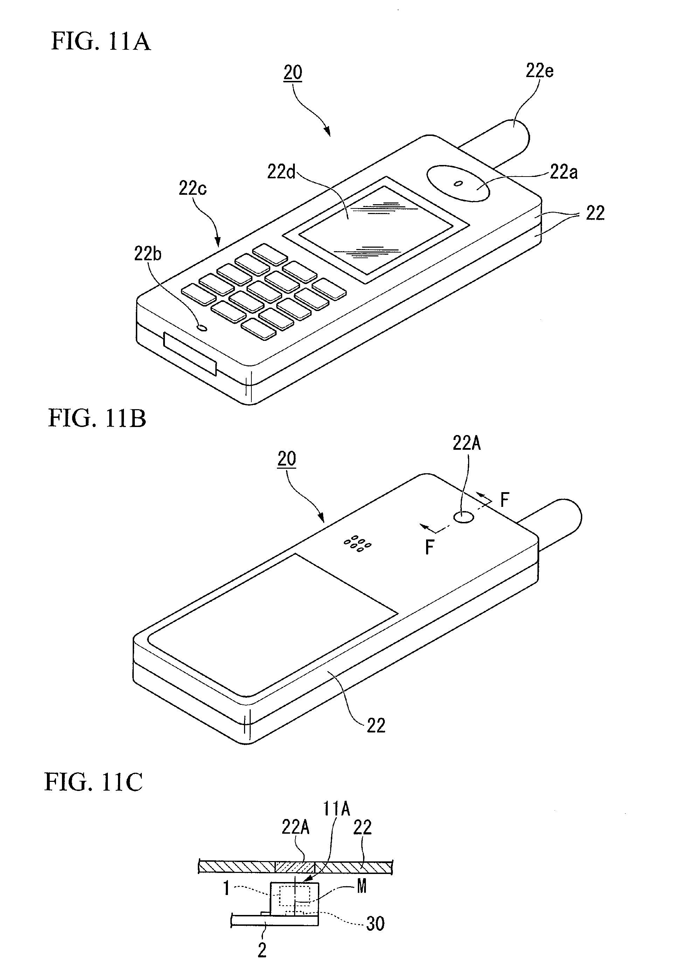

FIGS. 11A and 11B are respectively front and rear perspective views of the external appearance of an electronic apparatus related to the embodiment of the invention. FIG 11 C is a partial sectional view taken along a line F-F in FIG 11B.

A cellular phone 20 with a camera of the present embodiment shown in FIGS. 11A and 11B is an example of an electronic apparatus including the drive module 1 of the above embodiment.
The cellular phone 20 with a camera includes widely-known apparatus components of a cellular phone, such as a receiver section 22a, a mouthpiece section 22b, an operation section 22c, a liquid crystal display section 22d, an antenna section 22e, and a control circuit section (not shown), inside and outside the cover 22.

Additionally, the drive module 1 of the first embodiment is installed so that the cover 22 on the back side of the side where the liquid crystal display section 22d is provided with a window 22A for allowing outside light to be transmitted therethrough, as shown in FIG 11B and so that the opening 11A of the drive module 1 faces the window 22A of the cover 22, and the axis M runs along a normal direction of the window 22A as shown in FIG 11 C.

Also, the drive module 1 is mechanically and electrically connected to the substrate 2. The substrate 2 is connected to the control circuit section (not shown) so that electric power can be supplied to the drive module 1.

According to such a configuration, the light which has been transmitted through the window 22A can be condensed on the lens unit 12 (not shown) of the drive module 1 and can be imaged on an image element 30. Also, by supplying proper electric power to the drive module 1 from the control circuit unit, the lens unit 12 can be driven in the direction of the axis M to perform focal position adjustment, thereby performing photographing.
According to such a cellular phone 20 with a camera, the cellular phone includes the drive module 1 of the above embodiment. Therefore, the positional deviation of attachment of the SMA wire 10 can be suppressed, variations in the travel distance of the lens frame 4 can be suppressed, and high precision and high reliability can be secured.

In addition, it should be understood that the invention is not limited to the above-described embodiments, but various modifications of the above-described embodiments may be made without departing from the spirit and scope of the invention. That is, the specific forms and configurations as mentioned in the embodiments are merely examples, and can be appropriately changed.

For example, although the case where the upper fixing pins 13A and 14A and the lower fixing pins 13B and 14B are inserted through the upper plate spring 6 and the lower plate spring 7 which are the plate spring members for biasing the lens frame 4, and the tip portions of the fixing pins are heat-caulked has been described as an example in the present embodiment, the method of fixing the plate spring member is not limited thereto. For example, the fixing may be made by ultrasonic caulking or the like, or the plate spring members may be adhered to the lens frame 4 or the module frame 5. According to the present structure, since a large adhesion area can be secured, a large strength is obtained even if an adhesive is used.

Additionally, although the module frame 5 has been described as a substantially rectangular member as a whole in the above description, the module frame is not limited to a substantially rectangular shape, and may be an arbitrary polygonal shape.

Additionally, although the case where the drive module 1 is used for a focal position adjusting mechanism of the lens unit has been described as an example in the above description, applications of the drive module are not limited thereto. For example, the drive module may be used for other parts as a proper actuator which moves the body to be driven to a target position. For example, instead of the lens unit 12, the drive module may be used as a proper actuator by screwing a rod member or the like or by changing the shape of the lens frame 4 into other shapes. That is, the body to be driven is not be limited to the tubular member, and may be a columnar member.

Additionally, although the example of the cellular phone with a camera has been described as an electronic apparatus using the drive module in the above description, the type of the electronic apparatus is not limited thereto. For example, the drive module may be used for optical apparatuses, such as a digital camera and a camera with a built-in personal computer, and can also be used as an actuator which moves the body to be driven to a target position in electronic apparatuses, such as an information reading and storage apparatus and a printer.

### Industrial Applicability

The invention can be suitably used as the drive module which moves the body to be driven, using contraction of the shape memory alloy wire.

### Reference Signs List

1: DRIVE MODULE
4: LENS FRAME (BODY TO BE DRIVEN)
5: MODULE FRAME (SUPPORTING BODY)
6: UPPER PLATE SPRING (PLATE SPRING MEMBER)
7: LOWER PLATE SPRING (PLATE SPRING MEMBER)
10: SMA WIRE (SHAPE MEMORYALLOY WIRE, DRIVING DEVICE)
15A, 15B: WIRE HOLDING MEMBER (HOLDING TERMINAL)
15b: WIRE HOLDING PORTION
20: CELLULAR PHONE WITH CAMERA (ELECTRONIC APPARATUS)
35A, 35B: PIN
36A, 36B: THROUGH HOLE (FITTING PORTION, THROUGH HOLE FOR FITTING)
35C: WALL PORTION
37A, 37B: THROUGH HOLE (THROUGH HOLE FOR ADHESION)
38A, 38B: ARM PORTION (REGULATING PORTION, ABUTTING PORTION)
115A, 115B: WIRE HOLDING MEMBER (HOLDING TERMINAL)
215: WIRE HOLDING MEMBER (HOLDING TERMINAL)
215b: WIRE HOLDING PORTION
235: PIN
236: THROUGH HOLE (FITTING PORTION, THROUGH HOLE FOR FITTING)
235C: WALL PORTION
238: ABUTTING PORTION (REGULATING PORTION)
315: WIRE HOLDING MEMBER (HOLDING TERMINAL)
336: THROUGH HOLE (FITTING PORTION, THROUGH HOLE FOR FITTING)
341: DETENT PIN
351: THROUGH HOLE FOR DETENT (REGULATING PORTION)
415: WIRE HOLDING MEMBER (HOLDING TERMINAL)
436: THROUGH HOLE (FITTING PORTION, THROUGH HOLE FOR FITTING)
441: DETENT PIN
451: THROUGH HOLE FOR DETENT (REGULATING PORTION)

## Claims

1. A drive module comprising:
a tubular or columnar body to be driven;
a tubular supporting body for receiving therein the body to be driven;
a plate spring member for elastically holding the body to be driven so as to be movable in a specific direction with respect to the supporting body; and
a driving device for driving the body to be driven in the specific direction against a restoring force of the plate spring member,
wherein the driving device includes:
a shape memory alloy wire engaged with the body to be driven and contracted by heat, which is generated when an electric current is applied thereto, to drive the body to be driven against the restoring force of the plate spring member; and
a holding terminal having a wire holding portion for holding an end of the shape memory alloy wire,
wherein the holding terminal has a fitting portion positioned by being fitted to the supporting body, and a regulating portion serving as a detent of the supporting body, and
wherein the holding terminal is supported by and fixed to the supporting body.

2. The drive module according to Claim 1,
wherein the holding terminal includes:
a through hole for fitting serving as the fitting portion which is fitted to a pin formed on the supporting body, an abutting portion serving as the regulating portion which abuts on a wall portion formed at the supporting body and prevents rotation when the shape memory alloy wire is contracted, and a through hole for adhesion for allowing an adhesive to flow to between the holding terminal and the supporting body, and
wherein the supporting body and the holding terminal are fixed by the adhesive.

3. The drive module according to Claim 2,
wherein the through hole for adhesion is formed on the side opposite to the wire holding portion with the through hole for fitting therebetween.

4. The drive module according to Claim 1,
wherein the holding terminal includes:
a through hole for fitting serving as the fitting portion which is fitted to a pin formed on the supporting body, and an abutting portion serving as the regulating portion which abuts on a wall portion formed at the supporting body and prevents rotation when the shape memory alloy wire is contracted, and
wherein the supporting body and the holding terminal are fixed by welding the head of the pin.

5. The drive module according to Claim 1,
wherein the holding terminal includes a through hole for fitting serving as the fitting portion which is fitted to a pin formed on the supporting body, and a through hole for detent serving as the regulating portion which is fitted to a detent pin formed on the supporting body,
wherein the detent pin and the through hole for detent abut on at least the through hole for detent at two facing points in the detent pin, and
wherein the supporting body and the holding terminal are fixed by welding the head of the pin and the head of the detent pin.

6. The drive module according to Claim 5,
wherein the through hole for detent is formed on the side opposite to the wire holding portion with the through hole for fitting therebetween.

7. The drive module according to Claim 1,
wherein the holding terminal includes:
a through hole for fitting serving as the fitting portion which is fitted to a pin formed on the supporting body, and a through hole for detent serving as the regulating portion which is fitted to a detent pin formed on the supporting body,
wherein the detent pin and the through hole for detent abut on at least the through hole for detent at two facing points in the detent pin, and
wherein the supporting body and the holding terminal are fixed with an adhesive.

8. The drive module according to Claim 7,
wherein the through hole for detent is formed on the side opposite to the wire holding portion with the through hole for fitting therebetween.

9. An electronic apparatus comprising the drive module according to any one of Claims 1 to 8.

10. A method of assembling a drive module having:
a tubular or columnar body to be driven;
a tubular supporting body for receiving therein the body to be driven;
a plate spring member for elastically holding the body to be driven so as to be movable in a specific direction with respect to the supporting body; and
a driving device including
a shape memory alloy wire engaged with the body to be driven and contracted by heat, which is generated when an electric current is applied thereto, to drive the body to be driven against the restoring force of the plate spring member, and
a holding terminal having a wire holding portion for holding an end of the shape memory alloy wire,
the method comprising:
a disposing step of fitting a through hole for fitting formed in the holding terminal to a pin erected from the supporting body, thereby disposing the driving device, in a state where both ends of the shape memory alloy wire are held by the holding terminal; and
a fixing step of fixing the supporting body and the holding terminal to each other in a state where the shape memory alloy wire is contracted by heating and a wall portion formed at the supporting body and an abutting portion formed at the holding terminal abut on each other.

11. The method of assembling a drive module according to Claim 10,
wherein a through hole for adhesion for allowing a thermosetting adhesive to flow into the holding terminal is formed, and
wherein in the fixing step, the thermosetting adhesive is supplied to between the supporting body and the holding terminal through the through hole for adhesion, and heating contracts the shape memory alloy wire and hardens the thermosetting adhesive, thereby fixing the supporting body and the holding terminal to each other.

12. The method of assembling a drive module according to Claim 10,
wherein in the fixing step, heating is performed to contract the shape memory alloy wire and to weld the head of the pin, and thereby fixing the supporting body and the holding terminal to each other.

13. A method of assembling a drive module having:
a tubular or columnar body to be driven;
a tubular supporting body for receiving therein the body to be driven;
a plate spring member for elastically holding the body to be driven so as to be movable in a specific direction with respect to the supporting body; and
a driving device including
a shape memory alloy wire engaged with the body to be driven and contracted by heat, which is generated when an electric current is applied thereto, to drive the body to be driven against the restoring force of the plate spring member, and
a holding terminal having a wire holding portion for holding an end of the shape memory alloy wire,
the method comprising:
a disposing step of fitting a through hole for fitting formed in the holding terminal to a pin erected from the supporting body and fitting a through hole for detent formed in the holding terminal to a detent pin erected from the supporting body, thereby disposing the driving device, in a state where both ends of the shape memory alloy wire are held by the holding terminal; and
a fixing step of fixing the supporting body and the holding terminal to each other in a state where the shape memory alloy wire is contracted by heating and the detent pin and the through hole for detent abut on at least the through hole for detent at two facing points in the detent pin.

14. The method of assembling a drive module according to Claim 13,
wherein in the fixing step, a thermosetting adhesive is supplied to between the supporting body and the holding terminal, heating is performed to contract the shape memory alloy wire and to harden the thermosetting adhesive, and thereby fixing the supporting body and the holding terminal to each other.

15. The method of assembling a drive module according to Claim 13,
wherein in the fixing step, heating is performed to contract the shape memory alloy wire and to weld the head of the pin and the head of the detent pin, and thereby fixing the supporting body and the holding terminal to each other.
